# EUROPEAN PATENT APPLICATION

(11) **EP 1 181 861 A2**
(43) Date of publication of application: **27.02.2002**
(21) Application number: 01203094.6
(22) Date of filing: 14.08.2001
(51) Int. Cl.: A01G 9/08, B65B 1/06

(54) **Device and method for filling cavities with bulk material**

(30) Priority: 16.08.2000 NL 1015944
(71) Applicant: Mostert, Johannes Gerrit, 2685 VD Poeldijk (NL)
(72) Inventor: Mostert, Johannes Gerrit, 2685 VD Poeldijk (NL)
(74) Representative: Vollebregt, Cornelis Jacobus, Ir.

(57) **Abstract**

The invention relates to a device and a method for filling spaces in objects with bulk material, which device comprises a conveyor belt (2) for said objects as well as a filling mechanism (3) which is disposed some distance above the conveyor belt (2). The device comprises an endless belt (4), which runs synchronously with said conveyor belt (2) during operation, and which is disposed in such a manner that a part of said endless belt (4) extends at least substantially parallel to the upper part of said conveyor belt (2), spaced therefrom by some distance, and under the filing mechanism (3). The endless belt (4) is provided with openings for allowing bulk material to pass therethrough.

## Description

The invention relates to a device for filling spaces in objects with bulk material, comprising a frame and a conveyor belt for moving said objects, which is supported by said frame, as well as a filling mechanism which is disposed some distance above the conveyor belt.

Such a device is known from Dutch patent application no. 9200892. Such a device is intended for the filling with bulk material, usually cultivating material, of the spaces in rectangular containers, also called trays, which each contain a large number of spaces, which are passed in succession under the filling mechanism by means of the conveyor belt. Said known device is not suitable for filling individual pots. In practice it has become apparent, however, that there is a great need for a possibility of mechanically filling individual pots with bulk material in an efficient manner whilst preventing a large amount of bulk material falling beside the pots.

According to the invention this objective can be achieved in that the device comprises an endless belt, which runs synchronously with said conveyor belt during operation, and which is disposed in such a manner that a part of said endless belt extends at least substantially parallel to the upper part of said conveyor belt, spaced therefrom by some distance, and under the filing mechanism, whilst said endless belt is provided with openings for allowing bulk material to pass therethrough.

When using the construction according to the invention, existing devices for filling openings formed in containers or so-called trays with bulk material can readily be adapted for filling pots.

Another aspect of the invention relates to a method for operating a device for filling spaces in objects with bulk material which comprises a conveyor belt for moving said objects, as well as a filling mechanism disposed some distance above said conveyor belt, which is fitted with a scraper.

Such a method can be derived from the aforesaid Dutch patent application no. 9200892, wherein said scraper is a rotary scraping element, which moves the bulk material being supplied over the upper surfaces of containers or trays for the purpose of filling the spaces in said containers or trays in an effective manner.

According to the invention, objects in the form of individual pots are supplied by means of said conveyor belt, and a part of an endless belt provided with openings, in a pattern which corresponds to the pattern in which the pots are arranged on the conveyor belt, is caused to run along with said conveyor belt, at least substantially parallel to and some distance above said conveyor belt, wherein the bulk material is introduced into said pots, via the openings in the endless belt, by means of said scraper.

Pots can be filled in an efficient manner by means of this method, without an excess of bulk material falling beside the pots.

The invention will now be explained in more detail with reference to the accompanying figures.

Figure 1 schematically shows a device according to the invention.

Figure 2 is a larger-scale view of a part of the device that is shown in Figure 1.

Figure 3 is a schematic view of the arrangement of pots present in containers and of a part of the endless belt of the device according to the invention.

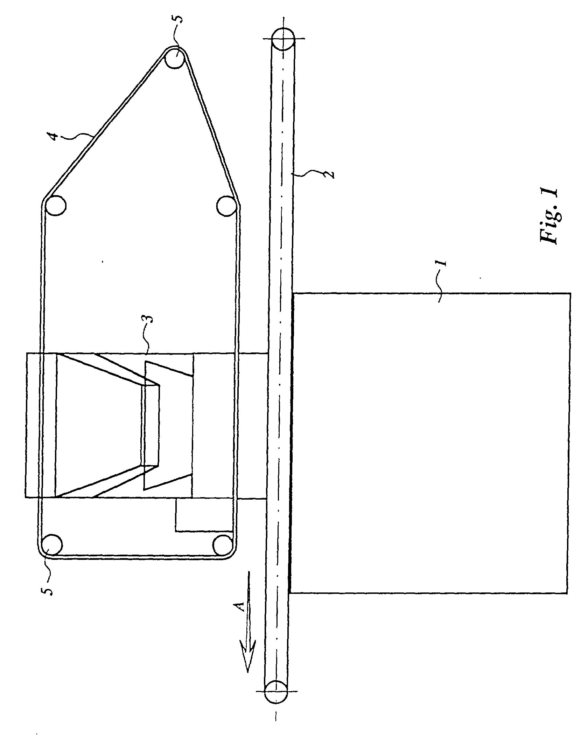

The device as shown in Figure 1 is of the type as disclosed in the aforesaid Dutch patent application no. 9200892, and it comprises a conveyor belt 2 supported by a frame 1, which is comparable to the conveyor belt 1 of the device described and depicted in Dutch patent application no. 9200892.

Disposed above said conveyor belt 2 is a filling mechanism 3 supported by frame 1 for supplying bulk material to objects supplied by means of conveyor belt 2.

The construction of said filling mechanism 3 may be similar to that of the filling mechanism by means of which the device according to Dutch patent application no. 920082 supplies bulk material to the trays being moved by means of conveyor belt 1 during operation in the aforesaid known device. Accordingly, the contents of Dutch patent application no. 920082 are considered to be incorporated herein by this reference to the said patent application.

According to the invention, the device furthermore comprises a drivable endless belt 4, which is passed over a number of pulleys 5 in such a manner that a portion of the lower part of said endless belt extends some distance above and parallel to the upper part of conveyor belt 2 and under the filling mechanism 3. Pulleys 5 are rotatably supported in an auxiliary frame (not shown), which can preferably be connected to and removed from the frame 1 fitted with the filling device 3 in a simple manner which is adapted to the construction of the frame 1 and the filling device 3 that is mounted thereon. After the auxiliary frame supporting the pulleys 5 has thus been connected, the endless belt 4 can be passed over pulleys 5. If the space between the upper part of the conveyor belt 2 and the outflow opening for the bulk material, which is present at the bottom side of the filling mechanism 3, is open on at least one side, the auxiliary frame supporting the pulleys 5 can possibly be connected to or removed from the frame 1 in its entirety with the endless belt 4 still present on the pulleys 5.

The construction is thereby such that the endless belt 4 runs synchronously with the conveyor belt 2 during operation, that is, the upper part of the endless conveyor belt 2 and the lower part of the endless belt 4 move at the same velocity in the direction indicated by arrow A during operation.

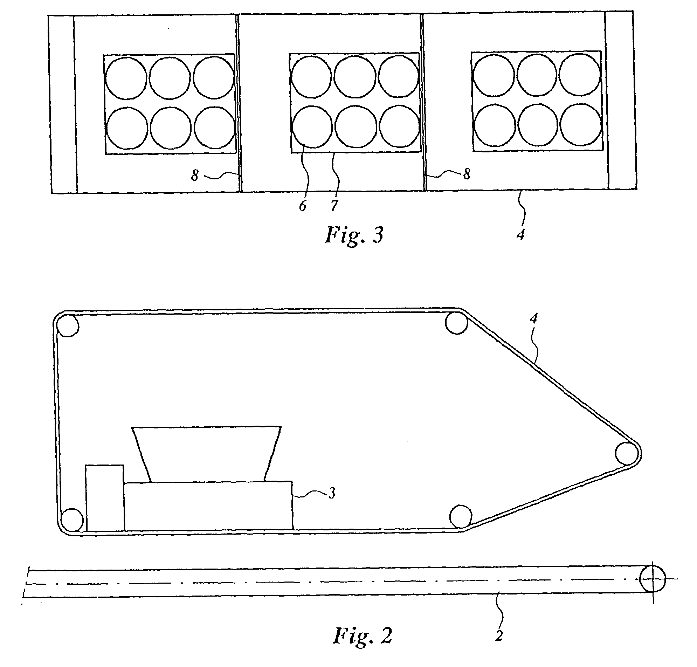

During operation, containers 7 containing pots 6 (Figure 3) can be moved in the direction indicated by arrow A by means of the endless conveyor belt 2 during operation. In order to ensure easy forward feeding of the containers with pots, the lower part of the endless belt 4 is guided in such a manner that said lower part slopes upwards in the intended direction of movement of containers 7 at its upstream end, as will be apparent from Figures 1 and 2.

Carriers or strips 8 extending transversely to the longitudinal direction of the belt 4 can be attached to the endless belt 4 for the purpose of moving the containers 7 at the correct distance apart.

Furthermore, the endless belt 4 will be provided with a pattern of holes corresponding to the pattern in which the pots 6 are arranged relative to endless belt 4, for example as shown in Figure 3.

The spacing between the upper part of conveyor belt 2 and the lower part of endless belt 4 extending parallel thereto is furthermore selected so that the endless belt at least substantially abuts against the upper ends of the pots 6, or that the pots 6 are slightly clamped between the belts.

During the movement of the pots 6 under the filling mechanism, bulk material can fall from the filling device, through the holes formed in endless belt 4, into the spaces bounded by pots 6 so as to fill the spaces bounded by said pots with the bulk material. A scraper which moves over the upper side of the lower part of the endless belt 4, for example the scraper 21 as used in the device according to Dutch patent application no. 9200892, thereby assists in filling the pots with the bulk material.

It will be understood that a device for filling pots can be obtained in a simple manner by using the construction according to the invention whilst at the same time using devices for filling so-called trays or the like. By mounting the pulleys 5 that guide the endless belt 4 on an auxiliary frame which can readily be fitted and removed, it is also possible in a simple and inexpensive manner to fit existing tray-handling devices with means for filling pots with these devices as well, so that a multi-purpose device is obtained.

## Claims

1. A device for filling spaces in objects with bulk material, comprising a frame and a conveyor belt for moving said objects, which is supported by said frame, as well as a filling mechanism which is disposed some distance above the conveyor belt, **characterized in that** the device comprises an endless belt, which runs synchronously with said conveyor belt during operation, and which is disposed in such a manner that a part of said endless belt extends at least substantially parallel to the upper part of said conveyor belt, spaced therefrom by some distance, and under the filing mechanism, whilst said endless belt is provided with openings for allowing bulk material to pass therethrough.

2. A device according to claim 1, **characterized in that** said endless belt is passed over pulleys, which are supported in an auxiliary frame which is detachably connected to the frame of the device.

3. A device according to claim 1 or 2, **characterized in that**, seen in the direction of movement during operation of the lower part of the endless belt being provided with openings, an upstream portion of said lower part slopes down in the direction of the conveyor belt, seen in the direction of transport.

4. A device according to any one of the claims 1 - 3, **characterized in that** the endless belt being provided with openings is provided with carrying elements for the pots.

5. A device according to any one of the claims 1 - 4, **characterized in that** the spacing between the part of the conveyor belt that supports the pots and the opposite part of the endless belt being provided with openings is such that the endless belt at least substantially abuts against the upper ends of the pots during operation.

6. An auxiliary frame comprising pulleys, which is obviously intended for use in a device according to any one of the preceding claims 2 - 5.

7. A method for operating a device for filling spaces in objects with bulk material which comprises a conveyor belt for moving said objects, as well as a filling mechanism disposed some distance above said conveyor belt, which is fitted with a scraper, **characterized in that** objects in the form of individual pots are supplied by means of said conveyor belt, and a part of an endless belt provided with openings, in a pattern which corresponds to the pattern in which the pots are arranged on the conveyor belt, is caused to run along with said conveyor belt, at least substantially parallel to and some distance above said conveyor belt, wherein the bulk material is introduced into said pots, via the openings in the endless belt, by means of said scraper.

8. A method according to claim 7, **characterized in that** a number of pots are placed in a container which is to be placed on said conveyor belt.
